# EUROPÄISCHE PATENTSCHRIFT

(11) **EP 4 605 282 B1**
(45) Veröffentlichungstag und Bekanntmachung des Hinweises auf die Patenterteilung: **07.10.2026**
(21) Anmeldenummer: 23782433.9
(22) Anmeldetag: 25.09.2023
(51) Int. Cl.: B60T 8/88, B60T 17/22, B60T 8/172

(54) **VERFAHREN ZUR ÜBERWACHUNG DER BREMSWIRKUNG EINES FAHRZEUGS, BREMSENSTEUERGERÄT, BREMSSYSTEM UND FAHRZEUG**
METHOD FOR MONITORING THE BRAKING ACTION OF A VEHICLE, BRAKE CONTROL UNIT, BRAKE SYSTEM, AND VEHICLE
PROCÉDÉ DE SURVEILLANCE DE L'ACTION DE FREINAGE D'UN VÉHICULE, UNITÉ DE COMMANDE DE FREINAGE, SYSTÈME DE FREINAGE ET VÉHICULE

(30) Priorität: 18.10.2022 DE 102022127155
(43) Veröffentlichungstag der Anmeldung: 27.08.2025
(73) Patentinhaber: ZF CV Systems Global GmbH, 3006 Bern (CH)
(72) Erfinder: RODENBERG, Alexander, 38102 Braunschweig (DE); TOPIC, Oliver, 30459 Hannover (DE); STENDER, Axel, 31787 Hameln (DE); VON DER BEEKE, Jan-Christoph, 31191 Algermissen (DE)
(74) Vertreter: Ohlendorf, Henrike
(86) Internationale Anmeldenummer: PCT/EP2023/076359
(87) Internationale Veröffentlichungsnummer: WO 2024/083447

(56) Entgegenhaltungen:
- EP-A1- 3 753 794
- WO-A1-2016/030699
- WO-A1-2020/104069
- WO-A1-99/06809
- WO-A2-2013/034735
- DE-A1- 19 526 645
- US-A1- 2016 016 574
- US-B1- 6 405 117

## Beschreibung

Die Erfindung betrifft ein Verfahren zur Überwachung der Bremswirkung eines Fahrzeugs mit Fahrwerk, Rädern, Bremsen und elektronischem Bremssystem. Außerdem betrifft die Erfindung ein Bremsensteuergerät, ein elektronisches Bremssystem und ein Fahrzeug.

Im Laufe der Zeit kann die Bremswirkung einer einem Rad zugeordneten Bremse mit Bremsbelägen nachlassen. Dies kann durch sogenanntes Einschlafen der Bremsbeläge in Folge unzureichender Temperatureinleitung geschehen. Gründe hierfür können sein:
- Fahrzeuge mit verschleißfreien Dauerbremsen, welche anstelle der Bremsen mit Bremsbelägen genutzt werden,
- elektrifizierte Fahrzeuge mit Rekuperationseinrichtungen als verschleißfreie Dauerbremsen,
- häufiges Fahren mit geringer Achslast, so dass vom Bremssystem unter Berücksichtigung der Achslast nur geringe Bremsdrücke ausgesteuert werden,
- überwiegende Fahrt mit konstanter Geschwindigkeit über lange Strecken, zum Beispiel im Fernverkehr.

Alternativ oder zusätzlich kann eine Bremswirkung durch schleifende Bremsen vorliegen, ohne dass dies beabsichtigt ist. Gründe hierfür können sein:
- Sogenanntes Hängen der Bremse durch einen mechanischen Defekt oder Korrosion,
- in Bremssystemen mit Federspeichern teilweises Einfallen eines oder mehrerer Federspeicher aufgrund von Leckagen,
- erhöhtes Radlagerspiel, welches zum Taumeln von Bremsscheiben führen kann, so dass die Bremsscheiben zeitweise an den Bremsbelägen anliegen.

Die genannten Defekte können im laufenden Betrieb nur schwer festgestellt werden. Eine zu geringe Bremskraft wird meist erst im Rahmen gesetzlicher Kontrollen festgestellt. Der Fahrer bemerkt dies in der Regel nicht, da es sich um einen schleichenden Prozess handelt und die nachlassende Bremskraft im Anhängefahrzeug im Teilbremsbereich durch eine Koppelkraftregelung im Zugfahrzeug kompensiert wird, d.h. das Anhängefahrzeug einen höheren Steuerdruck erhält. Eine schleifende Bremse resultiert meist in starker Temperaturentwicklung, welche beim Feststellen derselben bereits zu Folgeschäden geführt hat, etwa an der Bremsscheibe oder am Radlager. Um den einwandfreien Zustand der Bremse festzustellen, sind aufwendige Kontrollen auf einem Rollenprüfstand notwendig. Derartige Kontrollen stellen aber nur eine Momentaufnahme dar. Häufige Kontrollen mit geringen zeitlichen Abständen sind aus Kostengründen nicht erwünscht.

WO 2020/104069 A1 offenbart ein Verfahren zur Überwachung der Bremsleistung eines Bremssystems einer Maschine. Die Bremsleistung des Bremssystems wird überwacht, indem ein Bremsvorgang zum Abbremsen der Maschine erkannt wird. Während des Bremsvorgangs wird ein parasitärer Verlust bestimmt, der die Maschine während des Bremsvorgangs abbremst. Der parasitäre Verlust wird verwendet, um eine Verzögerung der Maschine während des Bremsvorgangs vorherzusagen. Die Bremsleistung des Bremssystems der Maschine wird aus der vorhergesagten Verzögerung bestimmt.

WO 99/06809 A1 offenbart ein Verfahren und eine Vorrichtung zur Bestimmung einer Bremswirksamkeit eines Fahrzeugs. Die Vorrichtung umfasst Mittel zur Bestimmung eines Bremsdrucks während einer Verzögerung im normalen Betriebsmodus, Mittel zur Bestimmung einer vorhergesagten und einer tatsächlichen Verzögerung des Fahrzeugs sowie eine Recheneinheit, die aus den Daten der tatsächlichen Verzögerung, Straßenneigung, Luft- und Motorwiderstand, Bremsdruck und Masse die Bremswirksamkeit des Fahrzeugs berechnet, indem die tatsächliche Verzögerung mit der vorhergesagten Verzögerung unter vergleichbaren Umständen verglichen wird, und ein Signal erzeugt, das die Bremswirksamkeit repräsentiert. Die Vorrichtung liefert Rückmeldung über die Fahrzeugverzögerung und signalisiert einen Trend nachlassender Bremswirksamkeit während der Verzögerung. Die Vorrichtung ermöglicht eine Warnung des Fahrers bei nachlassender Bremswirkung oder Überladung.

US 2016/016574 A1 offenbart ein Verfahren zur Überwachung der Bremsleistung eines Fahrzeugs. Eine modellierte Verzögerung des Fahrzeugs kann basierend auf einem Hauptzylinderdruck des Fahrzeugbremssystems berechnet werden. Die modellierte Verzögerung kann mit einer gemessenen Verzögerung des Fahrzeugs verglichen werden. Eine Benachrichtigung kann ausgelöst werden, wenn eine Differenz zwischen der modellierten Verzögerung und der gemessenen Verzögerung einen Schwellenwert überschreitet.

WO 2016/030699 A1 offenbart ein Verfahren zur Überwachung einer Bremsleistung eines Fahrzeugs. Das Verfahren umfasst für mindestens einige Bremsvorgänge ein Bestimmen eines Bremswunsches und ein Bestimmen einer Fahrzeugverzögerung, ein Definieren eines Datensatzes von Bremsvorgängen, wobei jeder Bremsvorgang im Datensatz einen bestimmten Bremswunsch und eine bestimmte Fahrzeugverzögerung enthält, ein Anwenden einer statistischen Trendanalyse auf den Datensatz zur Erzeugung eines Trends von Fahrzeugverzögerung und Bremswunsch, ein Bereitstellen einer Referenz für Fahrzeugverzögerung und Bremswunsch sowie ein Vergleichen eines Trendwerts mit mindestens einem Referenzwert. Durch diesen Vergleich soll festgestellt werden, ob das Bremssystem innerhalb eines akzeptablen Bereichs arbeitet.

EP 3 753 794 A1 offenbart ein Verfahren zur Überwachung einer Bremsleistung eines Fahrzeugs, insbesondere eines Anhängers eines Nutzfahrzeugs. Das Verfahren umfasst das Sammeln von Sensordaten verschiedener Sensoren, die mit Bremsvorgängen assoziiert sind, und das Bestimmen eines Bremsleistungswerts anhand der Sensordaten. Weiterhin umfasst das Verfahren das Erkennen einer Fehlfunktion einer Bremse anhand des bestimmten Bremsleistungswerts. Das Verfahren kann eine Ausgabe von Ergebnissen zur Anzeige oder zur Warnung eines Fahrers beinhalten.

US 6 405 117 B1 offenbart ein Verfahren zur Diagnose von Zuständen eines Fahrzeugbremssystems, die die Bremswirkung beeinträchtigen, und ein Informieren eines Fahrers über den Zustand, sodass eine Reparatur oder Einstellung erfolgen kann. Eine Beziehung zwischen einer Bremspedalstellung und einer Fahrzeugverzögerung wird während eines Kalibrierungsintervalls bestimmt, um eine Kalibrierungstabelle der Bremswirkung zu erstellen, und dann periodisch über die Lebensdauer des Bremssystems, um eine aktuelle Bremswirkungstabelle zu entwickeln. Abnormalitäten des Bremssystems, die die Bremswirkung beeinträchtigen, werden durch Analyse der Tabellenwerte diagnostiziert.

DE 195 26 645 A1 offenbart eine elektromotorische Bremse für Fahrzeuge, bei der für jede Radbremse durch entsprechende Messeinrichtungen wirkende Bremsenkräfte bzw. Bremsmomente sowie Steuersignale für elektromotorische Stelleinrichtungen der Radbremsen ermittelt werden. Auf der Basis dieser Signale werden durch Vergleich unplausible Abweichungen erkannt bzw. durch Heranziehen der entsprechenden Signale anderer Radbremse derselben und/oder weiterer Achsen ein fehlerbehaftetes Signal erkannt.

Aufgabe der vorliegenden Erfindung ist die Schaffung eines Verfahrens, mit dem die genannten Defekte im laufenden Betrieb erfasst werden können.

Zur Lösung der Aufgabe weist das erfindungsgemäße Verfahren die Merkmale des Anspruchs 1 auf. Insbesondere ist vorgesehen, dass während eines Bremsvorgangs eine mit der Ist-Bremskraft korrelierte Ist-Größe und eine mit der Soll-Bremskraft korrelierte Soll-Größe ermittelt werden. Weiterhin ist vorgesehen, dass aus einem Vergleich von Ist-Größe und Soll-Größe ein Betrag eines Vergleichswerts berechnet wird und dass eine Folgeaktion ausgelöst wird, wenn der Betrag des Vergleichswerts über einem Grenzwert liegt.

Bremskraft ist die an jeder Radaufstandsfläche wirkende Kraft in Fahrzeuglängsrichtung gegen die Fahrgeschwindigkeit beim Abbremsen des Fahrzeugs. Die Bremskraft ist im laufenden Betrieb nicht exakt ermittelbar, da an der Reifenaufstandsfläche keine Sensoren angeordnet werden können. Mit der Bremskraft korrelierte Größen können aber anhand von am Fahrzeug wirksamen Reaktionskräften gemessen oder berechnet werden. Aus den beim Bremsen auftretenden Reaktionskräften kann somit die mit der Ist-Bremskraft korrelierte Ist-Größe bestimmt werden. Zugleich kann die mit der Soll-Bremskraft korrelierte Soll-Größe aus dem aktuellen Zustand des Bremssystems des Fahrzeugs bestimmt werden. Zusätzlich oder alternativ können auch andere über ohnehin im Fahrzeug vorhandene Sensoren ermittelbare Werte und/oder Daten aus der Fahrzeuggeometrie herangezogen werden.

Ist-Größe und Soll-Größe werden vom Bremssystem einmal oder mehrfach ermittelt, sobald ein Bremsvorgang erkannt wird. Aus einem Vergleich von Ist-Größe und Soll-Größe wird ein Vergleichswert berechnet. Vorzugsweise wird der Vergleichswert sofort berechnet, sobald Ist-Größe und Soll-Größe ermittelt sind. Die Berechnung des Vergleichswerts kann aber auch später oder mit Verzögerung stattfinden. Wenn ein vom Vorzeichen des Vergleichswerts unabhängiger Betrag desselben über einem Grenzwert liegt, wird eine Folgeaktion ausgelöst. Die Folgeaktion dient insbesondere der Information des Fahrers, der Information einer Person außerhalb des Fahrzeugs und/oder der Übergabe des Vergleichswerts in einen Fehlerspeicher. Mit dem erfindungsgemäßen Verfahren können sowohl eine nachlassende Bremskraft der Radbremsen, als auch schleifende Radbremsen erfasst und offenbart werden.

Für den Fall $Soll - Größe = 0 ,$ mit $Ist - Größe > 0 ,$ wird eine Folgeaktion erst ausgelöst, wenn eine Ist-Bremsenergie in einem Zeitintervall einen Energiegrenzwert überschreitet. Vergleichswert können die Differenz aus Ist-Größe und Soll-Größe, ein Quotient oder eine andere abgeleitete Größe sein. Abgeleitete Größe ist insbesondere die Ist-Bremsenergie in einem Zeitintervall. Ein Maß für die Ist-Bremsenergie kann beispielsweise ermittelt werden aus Ist-Bremskraft und Raddrehzahl, bezogen auf ein definiertes Zeitintervall. Wenn vor Ablauf des Zeitintervalls die Ist-Bremsenergie den Energiegrenzwert überschritten hat, liegt ein relevanter Fehler vor und die Folgeaktion wird ausgelöst. Das Zeitintervall kann beliebig festgelegt oder auf unendlich gesetzt werden. Beispielsweise endet das Zeitintervall, wenn zwischenzeitlich die Ist-Größe auf 0 absinkt, insbesondere bei endlichen Zeitintervallen.

Nach einem weiteren Gedanken der Erfindung kann die mit der Ist-Bremskraft korrelierte Ist-Größe die Ist-Bremskraft selbst oder eine Ist-Verzögerung sein. Analog gilt dies für die Soll-Größe. Aus Masse des Fahrzeugs und Verzögerung desselben kann die Bremskraft berechnet werden. Die Masse kann aus detektierten Achslasten bestimmt werden. Moderne Nutzfahrzeuge und deren Bremssysteme sind ohnehin mit Achslastsensoren und Beschleunigungssensoren ausgestattet. Sofern im Zusammenhang mit der Erfindung Ist-Größe oder Soll-Größe erwähnt sind, können zumindest Bremskraft oder Verzögerung für die Größe eingesetzt werden, oder jede andere mit der Bremskraft korrelierte Größe.

Nach einem weiteren Gedanken der Erfindung kann die Ist-Größe aus wenigstens einer am Fahrwerk des Fahrzeugs gemessenen Reaktionskraft bestimmt werden. Die Reaktionskraft kann sich mittelbar aus der Verwindung von Bauteilen des Fahrwerks ergeben, wobei die Verwindung mit Dehnungsmessstreifen messtechnisch erfassbar ist. Vorzugsweise werden Torsion oder Biegung eines Achsrohres als Verwindung gemessen. Das Achsrohr ist Teil einer Achse. Die Messung sollte zwischen der Bremse am Radende der Achse und einer Achshalterung erfolgen. Aus der Verwindung lässt sich auf die Ist-Größe schließen, insbesondere auf die Ist-Bremskraft oder Ist-Verzögerung .

Nach einem weiteren Gedanken der Erfindung kann die Soll-Größe aus Messdaten im Bremssystem des Fahrzeugs bestimmt werden. Beim Bremsen nimmt das Bremssystem einen bestimmten Zustand ein, der messtechnisch erfassbar ist oder ohnehin erfasst wird, etwa aus einer Bremsanforderung gemäß der Stellung eines Bremspedals, vorzugsweise in Verbindung mit einer Information über den Beladungszustand. Letzterer ergibt sich aus dem Druck in Tragbälgen einer Luftfederung. Mit diesen Daten können insbesondere die Soll-Bremskraft oder Soll-Verzögerung bestimmt werden.

Nach einem weiteren Gedanken der Erfindung kann die Soll-Größe anhand einer Kennlinie unter Verwendung von Messwerten aus dem Bremssystem bestimmt werden. Die Kennlinie und/oder deren Auswahl aus mehreren Kennlinien können durch Versuche bestimmt werden. Vorzugsweise kann eine Kennlinie für einen bestimmten Beladungszustand verwendet werden, wobei insbesondere einzelne Punkte entlang der Kennlinie durch Verzögerungsversuche mit ordnungsgemäß funktionierenden Bremsen ermittelbar sind.

Nach einem weiteren Gedanken der Erfindung kann wenigstens einer der folgenden Messwerte aus dem Bremssystem für die Bestimmung der Soll-Größe verwendet werden:
a) Bremsanforderung,
b) Bremsdruck im Bremssystem,
c) Bremsdruck in einem Bremszylinder,
d) Achslast,
e) Fahrzeuggeschwindigkeit,
f) Fahrzeugverzögerung,
g) Einzelradgeschwindigkeit,
h) Einzelradbeschleunigung.

Die Bremsanforderung kann sich aus der Stellung eines Bremspedals oder eines anderen Bremswertgebers ergeben. Der Bremsdruck im Bremssystem liegt üblicherweise im Bremsensteuergerät vor. Zusätzlich kann durch geeignet angeordnete Sensoren der Bremsdruck in den für das Verfahren relevanten Bremszylindern überwacht werden. Die Achslast ergibt sich für Fahrzeuge mit Luftfederung aus dem Druck in den Tragbälgen der Luftfederung. Die Fahrzeuggeschwindigkeit kann auf unterschiedliche Arten ermittelt werden, zumindest aus Navigationsdaten oder aus Daten von Raddrehzahlsensoren. Die Fahrzeugverzögerung kann zusätzlich durch einen Beschleunigungssensor bestimmt werden. Moderne elektronische Bremssysteme sind ohnehin mit einem oder mehreren Beschleunigungssensoren ausgestattet. Einzelradgeschwindigkeit und Einzelradbeschleunigung lassen sich ebenfalls aus den Daten der Raddrehzahlsensoren ermitteln. Relativ einfach ist die Bestimmung der Soll-Größe aus dem Bremsdruck im Bremssystem, insbesondere in Verbindung mit einer Kennlinie. Für eine individuelle Bestimmung an jedem einzelnen Rad kann der Bremsdruck im Bremszylinder, auch in Verbindung mit einer durch Versuche ermittelten Kennlinie herangezogen werden.

Nach einem weiteren Gedanken der Erfindung soll das Verfahren für die Bremsen wenigstens der Räder einer Achse des Fahrzeugs ausgeführt werden. Insbesondere ist es möglich, dass mit dem Verfahren alle Bremsen an den Rädern des Fahrzeugs überwacht werden.

Nach einem weiteren Gedanken der Erfindung können Ist-Größe, Soll-Größe und Vergleichswert für die Bremsen an den Rädern des Fahrzeugs separat ermittelt werden, so dass für jedes Rad mit Bremse eine separate Folgeaktion ausgelöst wird. Theoretisch kann die Bremswirkung an einigen Radbremsen unzureichend sein, während an einem oder mehreren Radbremsen die Bremsbeläge an den Bremsscheiben schleifen. Eine individuelle Betrachtung der Bremsen ist deshalb vorteilhaft.

Nach einem weiteren Gedanken der Erfindung kann für jede Bremse ein eigener Grenzwert herangezogen werden. Zumindest sinnvoll ist ein eigener Grenzwert je Achse, da die Achslasten von Achse zu Achse unterschiedlich sein können.

Nach einem weiteren Gedanken der Erfindung kann der Vergleichswert eine Differenz aus Ist-Größe und Soll-Größe sein. Der Vergleichswert ist so auf einfache Weise ermittelbar.

Alternativ kann der Vergleichswert ein Quotient aus Ist-Größe und Soll-Größe sein. Auch in diesem Fall ist der Vergleichswert einfach ermittelbar.

Nach einem weiteren Gedanken der Erfindung kann das Verfahren während eines Bremsvorgangs mehrfach ausgeführt werden. Jede Erfassung der Ist-Größe und der Soll-Größe ist eine Momentaufnahme. Die Größen können sich während des Bremsvorgangs ändern. Auch können bestimmte Fehlfunktionen erst nach längerer Zeit eines Bremsvorgangs oder bei höheren Bremsdrücken auftreten. Eine zyklische Wiederholung des Verfahrens innerhalb eines Bremsvorgangs ist deshalb vorteilhaft.

Nach einem weiteren Gedanken der Erfindung kann auch ein Mittelwert über mehrere erfasste Ist-Größen gebildet und als Ist-Größe für die Berechnung des Vergleichswerts verwendet werden. Dadurch kann eine Streuung von Messwerten ausgeglichen werden.

Erfindungsgemäß können auch Ist-Größen und Soll-Größen von verschiedenen Bremsungen gespeichert und daraus eine Kennlinie approximiert werden. Mit der approximierten Kennlinie kann die Ist-Größe bei einer spezifischen Bremsanforderung, z.B. 6,5 bar Kupplungskopfdruck mit zugehöriger Soll-Größe, ermittelt werden, ohne dass diese Bremsanforderung und die sich daraus ergebende Soll-Größe vorliegt oder vorgelegen hat. Die derart approximierte Kennlinie kann zur Beurteilung der Abbremsung des Fahrzeugs bei der periodischen technischen Überprüfung verwendet werden und so eine Messung auf einem Rollenprüfstand ersparen.

Vorzugsweise wird die Kennlinie nach einer definierten Anzahl an Bremsungen approximiert und gespeichert. Alternativ werden Datenpaare aus Ist-Größe und Soll-Größe gespeichert und bei oder kurz vor der technischen Prüfung wird die Kennlinie ermittelt.

Nach einem weiteren Gedanken der Erfindung kann wenigstens eine der nachfolgenden Folgeaktionen ausgelöst werden:
a) Es wird eine für einen Fahrer wahrnehmbare Warnung ausgegeben.
b) Es wird eine Information in einem Betriebsdatenspeicher des Bremssystems abgelegt.
c) Es wird eine Information unter Verwendung einer Telematik an einen Empfänger außerhalb des Fahrzeugs übermittelt.

Die für den Fahrer wahrnehmbare Warnung ist vorzugsweise optischer, akustischer oder taktiler Natur, insbesondere eine Warnlampe, ein Warnton oder eine Vibration. Die Information über die Überschreitung des Grenzwerts soll vorzugsweise in einem Fehlerspeicher eines Bremsensteuergeräts abgelegt werden. Das Bremsensteuergerät steuert vorteilhafterweise auch das erfindungsgemäße Verfahren. Die im Betriebsdatenspeicher abgelegte Information kann einem technischen Service, z.B. TÜV, zur Beurteilung der Bremsleistung über eine On-Board-Diagnose zur Verfügung gestellt werden. Auch kann die per Telematik übermittelte Information zur laufenden oder systematischen Überwachung der Bremsleistung verwendet werden.

Nach einem weiteren Gedanken der Erfindung kann bei Überschreiten des Grenzwerts vor dem Auslösen einer Folgeaktion eine Voraktion ausgelöst werden, nämlich eine Inkrementierung eines Fehlerzählers, wobei dann die Folgeaktion erst ausgelöst wird, wenn der Fehlerzähler einen Zählergrenzwert überschreitet. Somit wird die Folgeaktion nur ausgelöst, wenn mehrere Überschreitungen des Grenzwerts aufgetreten sind. Dadurch können Fehlalarme vermieden werden.

Nach einem weiteren Gedanken der Erfindung wird bei Nicht-Überschreiten des Grenzwerts eine negative Voraktion ausgelöst, nämlich eine Dekrementierung des Fehlerzählers. Das Nicht-Überschreiten des Grenzwerts während eines Bremsvorgangs, trotz vorangegangenem Überschreiten des Grenzwerts, kann bedeuten, dass der aufgetretene Fehler noch unbedeutend ist. Der Fall des Nicht-Überschreitens soll dann den Fehlerzähler wieder herabsetzen.

Nach einem weiteren Gedanken der Erfindung kann die Dekrementierung bei Nicht-Überschreiten des Grenzwerts geringer sein als die Inkrementierung des Fehlerzählers bei Überschreiten des Grenzwerts. Dadurch erhält das Überschreiten des Grenzwerts eine höhere Gewichtung, so dass trotz teilweiser Dekrementierung des Fehlerzählers zuverlässig eine Folgeaktion ausgelöst wird.

Nach einem weiteren Gedanken der Erfindung können wenigstens Ist-Größe oder Soll-Größe oder zur Bestimmung derselben vorgesehene Messwerte zyklisch erfasst werden, wobei ein Bremsvorgang angenommen wird, wenn wenigstens Ist-Größe oder Soll-Größe oder zur Bestimmung derselben vorgesehene Messwerte einen Bremsgrenzwert überschreiten. Dadurch kann unter anderem sichergestellt werden, dass schleifende Bremsen bei ausrollendem, also antriebslosem Fahrzeug erkannt werden. In diesem Fall gilt $Soll - Größe = 0 ,$ mit $Ist - Größe > 0 .$

Nach einem weiteren Gedanken der Erfindung kann die Ist-Bremsenergie aus der Ist-Größe und wenigstens einer verstrichenen Zeit oder Strecke berechnet werden. Ein hilfsweise vorgesehenes Maß für die Ist-Bremsenergie kann die Zeit sein, während der die Ist-Größe auftritt. Alternativ oder zusätzlich wird die Strecke berücksichtigt, während der die Ist-Bremskraft auftritt. Die vom Fahrzeug zurückgelegte Strecke ergibt sich aus den Signalen von Raddrehzahlsensoren, welche ohnehin vorgesehen sind.

Ein erfindungsgemäßes Bremsensteuergerät ist gemäß Anspruch 24 mit einer Software zur Durchführung des erfindungsgemäßen Verfahrens ausgestattet.

Ein erfindungsgemäßes elektronisches Bremssystem weist die Merkmale des Anspruchs 25 auf. Das Bremssystem weist insbesondere ein erfindungsgemäßes Bremsensteuergerät und Sensoren zur Erfassung von Daten für die Berechnung der Ist-Größe und Sensoren zur Erfassung von Daten für die Berechnung der Soll-Größe auf. Bei den genannten Daten kann es sich auch um solche handeln, die lediglich die Ist-Größen und/oder die Soll-Größen repräsentieren oder mit ihnen korreliert sind.

Nach einem weiteren Gedanken der Erfindung können die Sensoren zur Erfassung von Größen für die Berechnung der Ist-Bremskraft Sensoren zur Erfassung von wenigstens einer Biegung oder Torsion umfassen. Aus einer im Bereich eines Radendes oder einer Achse auftretenden Biegung oder Torsion kann auf die Ist-Bremskraft geschlossen werden.

Nach einem weiteren Gedanken der Erfindung können die Sensoren zur Erfassung von Daten für die Berechnung der Ist-Größe Dehnungsmessstreifen umfassen. Mit Dehnungsmessstreifen können insbesondere Biegung oder Torsion gemessen werden.

Nach einem weiteren Gedanken der Erfindung können die Sensoren zur Erfassung von Daten für die Berechnung der Soll-Größe wenigstens Sensoren zur Bestimmung von eines der nachfolgenden Daten umfassen:
a) Bremsanforderung,
b) Bremsdruck im Bremssystem,
c) Bremsdruck in einem Bremszylinder,
d) Achslast,
e) Fahrzeuggeschwindigkeit,
f) Fahrzeugverzögerung,
g) Einzelradgeschwindigkeit,
h) Einzelradbeschleunigung.

Gegenstand der Erfindung ist auch ein Fahrzeug mit den Merkmalen des Anspruchs 29. Insbesondere weist das Fahrzeug eine pneumatische Federung mit Tragbälgen und Balgdrucksensoren oder mechanische Federn mit einer Sensierung der Einfederung zur Ermittlung der Beladung auf.

Weitere Merkmale der Erfindung ergeben sich aus der Beschreibung im Übrigen und aus den Ansprüchen. Vorteilhafte Ausführungsbeispiele der Erfindung werden nachfolgend anhand von Zeichnungen näher erläutert. Es zeigen:
- Fig. 1: eine schematische Darstellung eines dreiachsigen Fahrzeugs mit elektronischem Bremssystem, insbesondere eines Anhängefahrzeugs,
- Fig. 2: eine schematische Darstellung des Fahrzeugs gemäß Fig. 1 in einer Rückansicht,
- Fig. 3: ein erstes Flussdiagramm zur Darstellung eines Verfahrens,
- Fig. 4: ein zweites Flussdiagramm zur Darstellung einer Abwandlung des Verfahrens,
- Fig. 5: eine qualitative Darstellung von Soll-Bremskraft Fc in Abhängigkeit von einer Bremsanforderung bc, nämlich für drei unterschiedliche Beladungszustände des Fahrzeugs,
- Fig. 6: die qualitative Darstellung gemäß Fig. 5, nur für volle Beladung und mit einem sich durch Differenz ergebenden Toleranzbereich für eine Ist-Bremskraft,
- Fig. 7: die qualitative Darstellung gemäß Fig. 6, jedoch mit einem sich durch Multiplikation ergebenden Toleranzbereich für die Ist-Bremskraft.

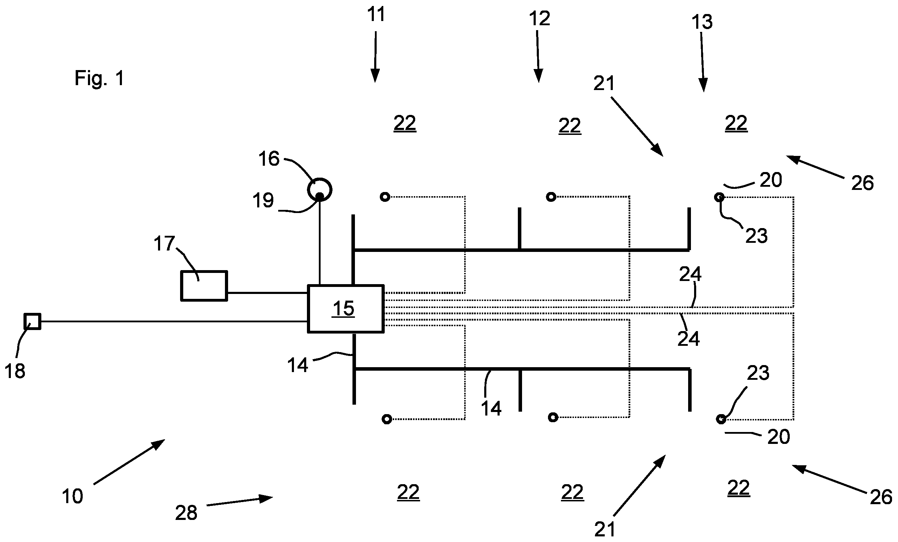

In Fig. 1 dargestellt ist ein Anhängefahrzeug 10 mit drei Achsen 11, 12, 13, eines Fahrwerks 28, pneumatischer Bremsanlage mit Bremsleitungen 14, elektronischem Bremssystem mit Bremsensteuergerät 15 und Luftfederung mit Tragbälgen 16, von denen hier nur einer eingezeichnet ist. Das Bremsensteuergerät 15 ist mit einer Telematikeinheit 17 für die drahtlose Übertragung von Daten insbesondere per Mobilfunk verbunden, ebenso mit einer Schnittstelle 18 nach ISO 7638-1: 2018-05 für eine elektrische Verbindung zu einem Zugfahrzeug. Je nach Land und Einsatzgebiet kann auch eine andere Schnittstelle vorgesehen sein. Am Tragbalg 16 ist ein Drucksensor 19 angeordnet, dessen Daten eine Achslast repräsentieren und zum Bremsensteuergerät 15 übermittelt werden.

Die Achsen 11, 12, 13 weisen jeweils Achsrohre 20, Bremsen 21 und Räder 22 auf. Die Bremsen 21 sind hier als Scheibenbremsen ausgeführt. Jedes Achsrohr 20 ist nahe der Bremse 21 mit einem Bremskraftsensor 23 versehen, insbesondere nach Art eines Dehnungsmessstreifens, mit dem beim Bremsen eine Torsion des jeweiligen Achsrohrs 20 detektierbar ist. Aus der Torsion kann unter Berücksichtigung der Fahrzeuggeometrie in diesem Bereich und der Materialeigenschaften auf die Bremskraft geschlossen werden. Alternativ kann der Zusammenhang durch Versuche ermittelt werden. Alternativ oder zusätzlich zur Torsion des jeweiligen Achsrohrs kann dessen Biegung beim Bremsen detektiert und in die Bremskraft umgerechnet werden.

Dadurch, dass jedem Rad 22 ein eigener Bremskraftsensor 23 funktional zugeordnet ist und die erfassten Daten über elektrische Leitungen 24 dem Bremsensteuergerät 15 zugeführt werden, kann dort für jedes Rad 22 eine Auswertung erfolgen.

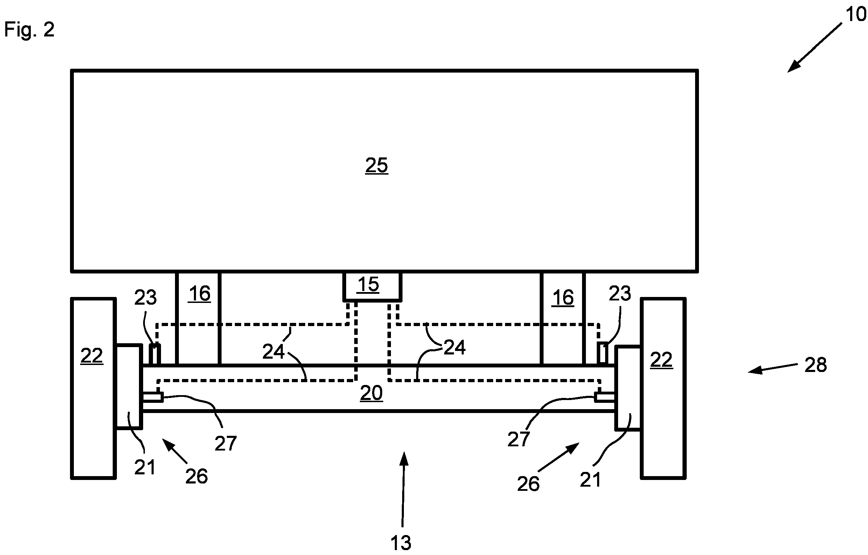

Fig. 2 zeigt das Anhängefahrzeug 10 in einer stark vereinfachten Rückansicht. Das Bremsensteuergerät 15 ist an einem Chassis 25 angeordnet, welches über die Tragbälge 16 auf der Achse 13 des Fahrwerks 28 abgestützt ist. An Radenden 26 der Achse 13 und des Achsrohrs 20 sind die Räder 22 mit Bremsen 21 und nicht gezeigten Radlagern gehalten. Jedes Radende 26 weist einen Raddrehzahlsensor 27 auf, dessen Daten ebenfalls im Bremsensteuergerät 15 zur Verfügung stehen.

Die von den Bremskraftsensoren 23 ermittelten Werte repräsentieren eine Ist-Bremskraft Fm an jedem Radende 26. Zeitlich parallel dazu ist eine Soll-Bremskraft Fc ermittelbar. Hierfür kann der über die Schnittstelle 18 übermittelte Wert eines Bremswertgebers mit dem Wert des Drucksensors 19 im Bremsensteuergerät 15 zusammengeführt werden, sodass sich ein die Soll-Bremskraft Fc repräsentierender Wert ergibt. Durch Vergleich von Ist-Bremskraft Fm mit Soll-Bremskraft Fc kann auf den Zustand der Bremsen 21 geschlossen werden.

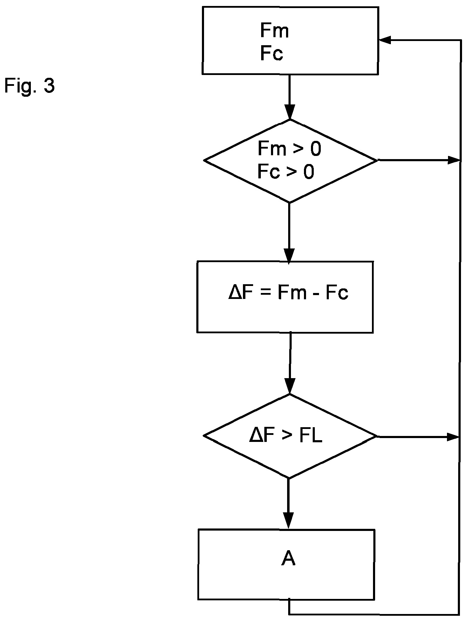

Der Ablauf des Verfahrens ist in Fig. 3 anhand eines Flussdiagramms dargestellt. Während eines Bremsvorgangs werden zeitlich parallel Ist-Bremskraft Fm und Soll-Bremskraft Fc ermittelt und ein Vergleichswert ΔF berechnet. Aus $Ist - Bremskraft Fm > 0$ und $Soll - Bremskraft > 0$ ist erkennbar, dass ein gewollter Bremsvorgang vorliegt.

Nach Berechnung des Vergleichswerts ΔF wird ein Betrag desselben mit einem Grenzwert FL verglichen. Ist der Betrag des Vergleichswerts ΔF größer als der Grenzwert FL, wird eine Folgeaktion A ausgelöst. Die Folgeaktion A ist insbesondere eine optische, akustische oder taktile Anzeige für die Bedienungsperson. Unabhängig vom Ergebnis des Vergleichs zwischen dem Grenzwert FL und dem Vergleichswert ΔF, werden die Verfahrensschritte wiederholt, sodass eine fortlaufende Überwachung gegeben ist.

Alternativ kann vor dem Auslösen der Folgeaktion A in einem Fehlerspeicher eine Aufsummierung der aufgetretenen Fälle mit ΔF > FL als Voraktion erfolgen. Die Folgeaktion A wird dann erst ausgelöst, wenn der Fehlerspeicher durch Inkrementierung einen bestimmten Wert erreicht hat. Zusätzlich kann eine Dekrementierung des Fehlerspeichers vorgesehen sein, sofern Fälle auftreten, in denen ΔF < FL ist. Dabei können Dekrementierung und Inkrementierung des Fehlerspeichers unterschiedlich stark gewichtet sein, etwa im Verhältnis 1:2, sodass die Inkrementierung doppelt so stark berücksichtigt wird.

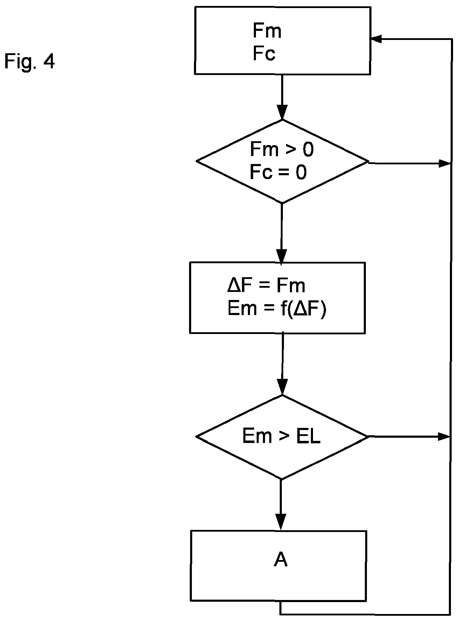

Fig. 4 betrifft den Spezialfall $Ist - Bremskraft Fm > 0$ mit $Soll - Bremskraft Fc = 0 .$

Dieser Fall tritt auf, wenn ohne Bremsanforderung eine Bremswirkung vorliegt, etwa bei schleifenden Bremsen. Daraufhin wird der Betrag des Vergleichswerts ΔF ermittelt, welcher in diesem Fall der Ist-Bremskraft Fm entspricht. Ausgehend von dem Vergleichswert ΔF wird eine Ist-Bremsenergie Em für ein definiertes Zeitintervall ermittelt. Die Ist-Bremsenergie Em ist somit eine Funktion des Vergleichswerts ΔF und entspricht vorzugsweise dem zeitlichen Integral des Vergleichswerts ΔF bzw. der Ist-Bremskraft Fm. Sofern die Ist-Bremsenergie Em einen Energiegrenzwert EL überschreitet, wird eine Folgeaktion A ausgelöst. Die Folgeaktion A kann beispielsweise entweder ein Hinweis für den Fahrer und/oder eine Nachricht an einen externen Empfänger über die Telematikeinheit 17 sein. Alternativ oder zusätzlich kann der Hinweis im Bremsensteuergerät 15 oder an anderer Stelle des Fahrzeugs gespeichert werden.

Analog zu Fig. 3 kann im Ausführungsbeispiel der Fig. 4 auch auf die Bestimmung der Ist-Bremsenergie Em verzichtet werden und stattdessen der Vergleichswert ΔF mit einem Grenzwert FL verglichen werden.

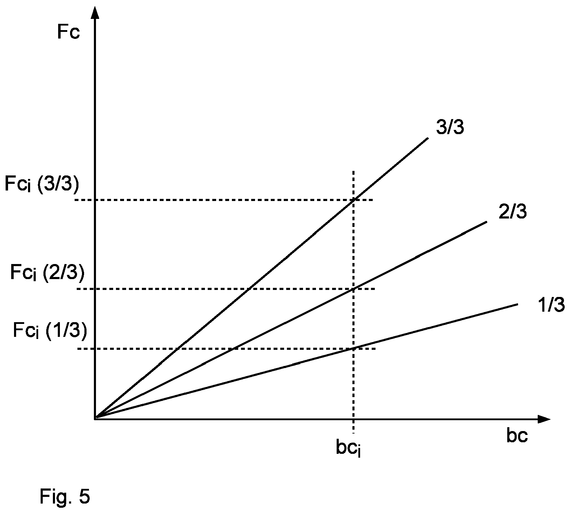

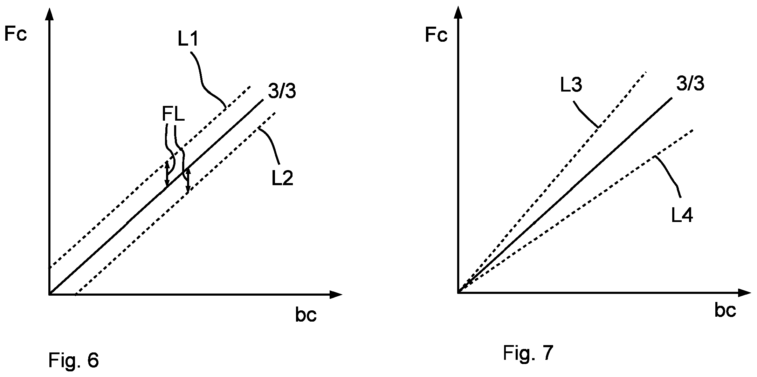

Fig. 5 zeigt im Vorlauf zu den Fig. 6 und 7 die Soll-Bremskraft Fc als Funktion einer Bremsanforderung bc. Letztere entspricht beispielsweise der Winkelstellung eines vom Fahrer betätigten Bremspedals. In Abhängigkeit von der Beladung sollen unterschiedliche Soll-Bremskräfte Fc wirken:
Bremsanforderung bc für leeres Fahrzeug ergibt Soll-Bremskraft Fc mit dem Verlauf "1/3",
Bremsanforderung bc für Teilladung ergibt Soll-Bremskraft Fc mit dem Verlauf "2/3",
Bremsanforderung bc bei voller Ladung ergibt Soll-Bremskraft Fc mit dem Verlauf "3/3".

Je nach Beladung ergeben sich hier drei verschiedene Kennlinien als Verläufe, die der Einfachheit halber als Geraden dargestellt sind. Für eine individuelle Bremsanforderung bcᵢ ergeben sich, je nach Beladung, unterschiedliche individuelle Soll-Bremskräfte Fcᵢ. In Abhängigkeit von der angestrebten Genauigkeit und von den Werten des Drucksensors 19 können auch mehr oder andere Verläufe berücksichtigt werden.

In den Fig. 6 und 7 wird zur Vereinfachung nur der Fall der vollen Beladung entsprechend dem Verlauf "3/3" betrachtet. Gemäß Fig. 6 ist ein Grenzwert FL vorgesehen, sodass sich um den Verlauf für die Soll-Bremskraft Fc ein Toleranzbereich ergibt, nämlich zwischen gestrichelten Linien L1 und L2. Wenn die ermittelte Ist-Bremskraft Fm in den Toleranzbereich zwischen den Linien L1 und L2 fällt, wird keine Folgeaktion A ausgelöst. Fällt jedoch die Ist-Bremskraft Fm aus dem Toleranzbereich zwischen den Linien L1 und L2 heraus, wird eine Folgeaktion A ausgelöst, entsprechend der Darstellung in Fig. 3.

Während Fig. 6 einen gleichbleibenden Grenzwert FL annimmt, unabhängig von der Bremsanforderung bc oder der Soll-Bremskraft Fc, vergrößert sich gemäß Fig. 7 der Toleranzbereich zwischen gestrichelten Linien L3, L4 mit größer werdender Bremsanforderung bc. Auch hier wird eine Folgeaktion A ausgelöst, wenn die ermittelte Ist-Bremskraft Fm außerhalb des Toleranzbereichs liegt.

Die Fig. 6 und 7 berücksichtigen sowohl die nachlassende Bremskraft, mit $Soll - Bremskraft Fc > 0$ und $Ist - Bremskraft Fm > 0 ,$ als auch den Fall einer schleifenden Bremse mit $Ist - Bremskraft Fm > 0$ und $Soll - Bremskraft Fc = 0 .$

Anstelle der Bremskräfte können auch damit korrelierte Größen für das Verfahren verwendet werden, insbesondere Ist-Verzögerungen und Soll-Verzögerungen des Fahrzeugs. Bei bekannter Beladung können Bremskraft und Verzögerung leicht umgerechnet werden. Die Beladung kann sich beispielsweise aus gemessenen Achslasten ergeben.

### Bezugszeichenliste (Teil der Beschreibung):

- 10: Anhängefahrzeug
- 11: Achse
- 12: Achse
- 13: Achse
- 14: Bremsleitungen
- 15: Bremsensteuergerät
- 16: Tragbälge
- 17: Telematikeinheit
- 18: Schnittstelle
- 19: Drucksensor
- 20: Achsrohre
- 21: Bremsen
- 22: Räder
- 23: Bremskraftsensor
- 24: elektrische Leitung
- 25: Chassis
- 26: Radende
- 27: Raddrehzahlsensor
- 28: Fahrwerk

- A: Folgeaktion
- bc: Bremsanforderung
- bcᵢ: individuelle Bremsanforderung EL Energiegrenzwert
- Em: Ist-Bremsenergie
- Fc: Soll-Bremskraft
- Fcᵢ: individuelle Soll-Bremskräfte
- Fm: Ist-Bremskraft
- FL: Grenzwert
- L1: Linie
- L2: Linie
- L3: Linie
- L4: Linie
- ΔF: Vergleichswert

## Patentansprüche

1. Verfahren zur Überwachung der Bremswirkung eines Fahrzeugs (10) mit Fahrwerk (28), Rädern (22), Bremsen (21) und elektronischem Bremssystem (15), **dadurch gekennzeichnet,**
a) **dass** während eines Bremsvorgangs eine mit der Ist-Bremskraft (Fm) korrelierte Ist-Größe und eine mit der Soll-Bremskraft (Fc) korrelierte Soll-Größe ermittelt werden,
b) **dass** aus einem Vergleich von Ist-Größe und Soll-Größe ein Vergleichswert (ΔF) berechnet wird, und
c) **dass** eine Folgeaktion (A) ausgelöst wird, wenn ein Betrag des Vergleichswerts (ΔF) über einem Grenzwert (FL) liegt,
**dadurch gekennzeichnet, dass** für den Fall Soll-Größe = 0, mit Ist-Größe > 0, eine Folgeaktion (A) erst ausgelöst wird, wenn eine Ist-Bremsenergie (Em) in einem Zeitintervall einen Energiegrenzwert (EL) überschreitet.

2. Verfahren nach Anspruch 1, **dadurch gekennzeichnet, dass** die mit der Ist-Bremskraft (Fm) korrelierte Ist-Größe die Ist-Bremskraft (Fm) selbst oder eine Ist-Verzögerung ist.

3. Verfahren nach Anspruch 1 oder 2, **dadurch gekennzeichnet, dass** die mit der Soll-Bremskraft (Fc) korrelierte Soll-Größe die Soll-Bremskraft (Fc) selbst oder eine Soll-Verzögerung ist.

4. Verfahren nach einem der vorhergehenden Ansprüche, **dadurch gekennzeichnet, dass** die Ist-Größe aus wenigstens einer am Fahrwerk (28) des Fahrzeugs (10) gemessenen Reaktionskraft bestimmt wird.

5. Verfahren nach einem der vorhergehenden Ansprüche, **dadurch gekennzeichnet, dass** die Soll-Größe aus Messwerten im Bremssystem (15) des Fahrzeugs (10) bestimmt wird.

6. Verfahren nach Anspruch 5, **dadurch gekennzeichnet, dass** die Soll-Größe anhand einer Kennlinie unter Verwendung von Messwerten aus dem Bremssystem (15) bestimmt wird.

7. Verfahren nach Anspruch 5 oder 6, **dadurch gekennzeichnet, dass** wenigstens einer der folgenden Messwerte aus dem Bremssystem (15) für die Bestimmung der Soll-Größe verwendet wird:
a) Bremsanforderung,
b) Bremsdruck im Bremssystem,
c) Bremsdruck in einem Bremszylinder,
d) Achslast,
e) Fahrzeuggeschwindigkeit,
f) Fahrzeugverzögerung,
g) Einzelradgeschwindigkeit,
h) Einzelradbeschleunigung.

8. Verfahren nach einem der vorhergehenden Ansprüche, **gekennzeichnet durch** eine Ausführung für die Bremsen (21) wenigstens der Räder (22) einer Achse (11, 12, 13) des Fahrzeugs (10).

9. Verfahren nach einem der vorhergehenden Ansprüche, **gekennzeichnet durch** eine Ausführung für alle Bremsen (21) an den Rädern (22) des Fahrzeugs (10).

10. Verfahren nach einem der vorhergehenden Ansprüche, **dadurch gekennzeichnet, dass** Ist-Größe, Soll-Größe und Vergleichswert (ΔF) für die Bremsen (21) an den Rädern (22) des Fahrzeugs (10) separat ermittelt werden, sodass für jedes Rad (22) mit Bremse (21) eine separate Folgeaktion (A) ausgelöst wird.

11. Verfahren nach Anspruch 10, **dadurch gekennzeichnet, dass** für jede Achse (11, 12, 13) oder Bremse (21) ein eigener Grenzwert (FL) herangezogen wird.

12. Verfahren nach einem der vorhergehenden Ansprüche, **dadurch gekennzeichnet, dass** der Vergleichswert (ΔF) eine Differenz aus Ist-Größe und Soll-Größe ist.

13. Verfahren nach einem der vorhergehenden Ansprüche, **dadurch gekennzeichnet, dass** der Vergleichswert (ΔF) ein Quotient aus Ist-Größe und Soll-Größe ist.

14. Verfahren nach einem der vorhergehenden Ansprüche, **gekennzeichnet durch** eine mehrfache Ausführung während des gesamten Bremsvorgangs.

15. Verfahren nach einem der vorhergehenden Ansprüche, **dadurch gekennzeichnet, dass** ein Mittelwert über mehrere erfasste Ist-Größen gebildet und als Ist-Größe für die Berechnung des Vergleichswerts verwendet wird.

16. Verfahren nach einem der vorhergehenden Ansprüche, **dadurch gekennzeichnet, dass** Ist-Größen und Soll-Größen von verschiedenen Bremsungen gespeichert werden und daraus eine Kennlinie approximiert wird.

17. Verfahren nach einem der vorhergehenden Ansprüche, **dadurch gekennzeichnet, dass** wenigstens eine der nachfolgenden Folgeaktionen ausgelöst wird:
a) es wird eine für einen Fahrer wahrnehmbare Warnung ausgegeben,
b) es wird eine Information in einem Betriebsdatenspeicher des Bremssystems (15) abgelegt,
c) es wird eine Information über eine Telematik (17) an einen Empfänger außerhalb des Fahrzeugs (10) übermittelt.

18. Verfahren nach Anspruch 17, **dadurch gekennzeichnet, dass** bei Überschreiten des Grenzwerts (FL) vor dem Auslösen einer Folgeaktion eine Voraktion ausgelöst wird, nämlich eine Inkrementierung eines Fehlerzählers, und dass die Folgeaktion (A) erst ausgelöst wird, wenn der Fehlerzähler einen Zählergrenzwert überschreitet.

19. Verfahren nach Anspruch 18, **dadurch gekennzeichnet, dass** bei Nicht-Überschreiten des Grenzwerts (FL) eine negative Voraktion ausgelöst wird, nämlich eine Dekrementierung des Fehlerzählers.

20. Verfahren nach Anspruch 19, **dadurch gekennzeichnet, dass** die Dekrementierung bei Nicht-Überschreiten des Grenzwerts (FL) geringer ist als die Inkrementierung des Fehlerzählers bei Überschreiten des Grenzwerts (FL).

21. Verfahren nach einem der vorhergehenden Ansprüche, **dadurch gekennzeichnet, dass** wenigstens Ist-Größe (Fm) oder Soll-Größe oder zur Bestimmung derselben vorgesehene Messwerte zyklisch erfasst werden, und dass ein Bremsvorgang angenommen wird, wenn wenigstens Ist-Größe oder Soll-Größe oder zur Bestimmung derselben vorgesehene Messwerte einen Bremsgrenzwert überschreiten.

22. Verfahren nach einem der vorhergehenden Ansprüche, **dadurch gekennzeichnet, dass** die Ist-Bremsenergie (Em) aus der Ist-Größe und wenigstens einer verstrichenen Zeit oder Strecke berechnet wird.

23. Bremsensteuergerät (15) mit einer Software zur Durchführung des Verfahrens nach einem der Ansprüche 1-22.

24. Elektronisches Bremssystem für ein Fahrzeug (10) mit Fahrwerk (28), Rädern (22) und Bremsen (21), **gekennzeichnet durch** ein Bremsensteuergerät (15) nach Anspruch 23 und mit Sensoren (23) zur Erfassung von Daten für die Berechnung der Ist-Größe und mit Sensoren (19, 27) zur Erfassung von Daten für die Berechnung der Soll-Größe.

25. Bremssystem nach Anspruch 24, **dadurch gekennzeichnet, dass** die Sensoren (23) zur Erfassung von Daten für die Berechnung der Ist-Größe Sensoren zur Erfassung wenigstens einer Biegung oder Torsion umfassen.

26. Bremssystem nach Anspruch 25, **dadurch gekennzeichnet, dass** die Sensoren (23) zur Erfassung von Daten für die Berechnung der Ist-Größe Dehnungsmessstreifen umfassen.

27. Bremssystem nach einem der Ansprüche 24 bis 26, **dadurch gekennzeichnet, dass** die Sensoren (19, 27) zur Erfassung von Daten für die Berechnung der Soll-Bremskraft (Fc) wenigstens Sensoren zur Bestimmung von einer der nachfolgenden Daten umfassen:
a) Bremsanforderung,
b) Bremsdruck im Bremssystem,
c) Bremsdruck in einem Bremszylinder,
d) Achslast,
e) Fahrzeuggeschwindigkeit,
f) Fahrzeugverzögerung,
g) Einzelradgeschwindigkeit,
h) Einzelradbeschleunigung.

28. Fahrzeug (10) mit pneumatischer Bremsanlage und elektronischem Bremssystem nach einem der Ansprüche 24 bis 27.

29. Fahrzeug nach Anspruch 28, **gekennzeichnet durch** eine pneumatische Federung mit Tragbälgen (16) und Balgdrucksensoren (19).

## Claims

1. Method for monitoring the braking effect of a vehicle (10) having a chassis (28), wheels (22), brakes (21), and an electronic brake system (15), **characterized**
a) **in that** an actual variable correlated with the actual braking force (Fm) and a target variable correlated with the target braking force (Fc) are ascertained during a braking procedure,
b) **in that** a comparison value (ΔF) is calculated from a comparison of the actual variable and the target variable, and
c) **in that** a follow-up action (A) is triggered if an absolute value of the comparison value (ΔF) is above a limit value (FL),
**characterized in that** in the case that the target variable = 0, with the actual variable > 0, a follow-up action (A) is only triggered if an actual braking energy (Em) in a time interval exceeds an energy limit value (EL).

2. Method according to claim 1, **characterized in that** the actual variable correlated with the actual braking force (Fm) is the actual braking force (Fm) itself or an actual deceleration.

3. Method according to claim 1 or 2, **characterized in that** the target variable correlated with the target braking force (Fc) is the target braking force (Fc) itself or a target deceleration.

4. Method according to any of the preceding claims, **characterized in that** the actual variable is determined from at least one reaction force measured on the chassis (28) of the vehicle (10).

5. Method according to any of the preceding claims, **characterized in that** the target variable is determined from measured values in the brake system (15) of the vehicle (10).

6. Method according to claim 5, **characterized in that** the target variable is determined on the basis of a characteristic curve using measured values from the brake system (15).

7. Method according to claim 5 or 6, **characterized in that** at least one of the following measured values from the brake system (15) is used to determine the target variable:
a) a brake request,
b) a brake pressure in the brake system,
c) a brake pressure in a brake cylinder,
d) an axle load,
e) a vehicle speed,
f) a vehicle deceleration,
g) an individual wheel speed,
h) an individual wheel acceleration.

8. Method according to any of the preceding claims, **characterized by** being carried out for the brakes (21) of at least the wheels (22) of one axle (11, 12, 13) of the vehicle (10).

9. Method according to any of the preceding claims, **characterized by** being carried out for all of the brakes (21) on the wheels (22) of the vehicle (10).

10. Method according to any of the preceding claims, **characterized in that** the actual variable, the target variable, and the comparison value (ΔF) are ascertained separately for the brakes (21) on the wheels (22) of the vehicle (10) so that a separate follow-up action (A) is triggered for each wheel (22) with a brake (21).

11. Method according to claim 10, **characterized in that** an individual limit value (FL) is used for each axle (11, 12, 13) or brake (21).

12. Method according to any of the preceding claims, **characterized in that** the comparison value (ΔF) is a difference between the actual variable and the target variable.

13. Method according to any of the preceding claims, **characterized in that** the comparison value (ΔF) is a quotient of the actual variable and the target variable.

14. Method according to any of the preceding claims, **characterized by** being carried out multiple times during the entire braking procedure.

15. Method according to any of the preceding claims, **characterized in that** an average is formed over a plurality of recorded actual variables and is used as the actual variable for calculating the comparison value.

16. Method according to any of the preceding claims, **characterized in that** the actual variables and the target variables from various braking operations are stored, and a characteristic curve is approximated therefrom.

17. Method according to any of the preceding claims, **characterized in that** at least one of the following follow-up actions is triggered:
a) a warning perceptible to the driver is issued,
b) information is stored in an operational data memory of the brake system (15),
c) information is transmitted via telematics (17) to a receiver outside the vehicle (10).

18. Method according to claim 17, **characterized in that** if the limit value (FL) is exceeded, a preliminary action is triggered, namely incrementing an error counter, before a follow-up action is triggered, **and in that** the follow-up action (A) is only triggered if the error counter exceeds a counter limit value.

19. Method according to claim 18, **characterized in that** if the limit value (FL) is not exceeded, a negative preliminary action is triggered, namely decrementing the error counter.

20. Method according to claim 19, **characterized in that** the error counter is decremented less if the limit value (FL) is not exceeded than it is incremented if the limit value (FL) is exceeded.

21. Method according to any of the preceding claims, **characterized in that** at least the actual variable (Fm) or the target variable or measured values for determining the same are recorded cyclically, **and in that** a braking procedure is assumed if at least the actual variable or the target variable or the measured values for determining the same exceed a braking limit value.

22. Method according to any of the preceding claims, **characterized in that** the actual braking energy (Em) is calculated from the actual variable and at least one elapsed time or covered distance.

23. Brake control unit (15) having software for performing the method according to any of claims 1 to 22.

24. Electronic brake system for a vehicle (10) having a chassis (28), wheels (22), and brakes (21), **characterized by** a brake control unit (15) according to claim 23 and having sensors (23) for acquiring data for calculating the actual variable and having sensors (19, 27) for acquiring data for calculating the target variable.

25. Brake system according to claim 24, **characterized in that** the sensors (23) for acquiring data for calculating the actual variable comprise sensors for acquiring at least one deflection or torsion.

26. Brake system according to claim 25, **characterized in that** the sensors (23) for acquiring data for calculating the actual variable comprise strain gages.

27. Brake system according to any of claims 24 to 26, **characterized in that** the sensors (19, 27) for acquiring data for calculating the target braking force (Fc) comprise at least sensors for determining one of the following types of data:
a) a brake request,
b) a brake pressure in the brake system,
c) a brake pressure in a brake cylinder,
d) an axle load,
e) a vehicle speed,
f) a vehicle deceleration,
g) an individual wheel speed,
h) an individual wheel acceleration.

28. Vehicle (10) having a pneumatic braking system and an electronic brake system according to any of claims 24 to 27.

29. Vehicle according to claim 28, **characterized by** a pneumatic suspension having supporting bellows (16) and bellows pressure sensors (19).

## Revendications

1. Procédé pour la surveillance de l'effet de freinage d'un véhicule (10) comportant un châssis (28), des roues (22), des freins (21) et un système de freinage (15) électronique, **caractérisé en ce**
a) **que**, pendant un processus de freinage, une grandeur réelle corrélée à la force de freinage réelle (Fm) et une grandeur de consigne corrélée à la force de freinage de consigne (Fc) sont déterminées,
b) **qu'**une valeur de comparaison (ΔF) est calculée à partir d'une comparaison entre la grandeur réelle et la grandeur de consigne, et
c) **qu'**une action consécutive (A) est déclenchée lorsqu'un montant de la valeur de comparaison (ΔF) dépasse une valeur limite (FL),
**caractérisé en ce que,** dans le cas où la grandeur de consigne = 0, avec la grandeur réelle > 0, une action consécutive (A) est déclenchée uniquement lorsque l'énergie de freinage réelle (Em) dépasse, au cours d'un intervalle de temps, une valeur limite d'énergie (EL).

2. Procédé selon la revendication 1, **caractérisé en ce que** la grandeur réelle corrélée à la force de freinage réelle (Fm) est la force de freinage réelle (Fm) elle-même ou une décélération réelle.

3. Procédé selon la revendication 1 ou 2, **caractérisé en ce que** la grandeur de consigne corrélée à la force de freinage de consigne (Fc) est la force de freinage de consigne (Fc) elle-même ou une décélération de consigne.

4. Procédé selon l'une des revendications précédentes,
**caractérisé en ce que** la grandeur réelle est définie à partir d'au moins une force de réaction mesurée au niveau du châssis (28) du véhicule (10).

5. Procédé selon l'une des revendications précédentes,
**caractérisé en ce que** la grandeur de consigne est définie à partir de valeurs de mesure dans le système de freinage (15) du véhicule (10).

6. Procédé selon la revendication 5, **caractérisé en ce que** la grandeur de consigne est définie à l'aide d'une courbe caractéristique en utilisant des valeurs de mesure provenant du système de freinage (15).

7. Procédé selon la revendication 5 ou 6, **caractérisé en ce qu'**au moins l'une des valeurs de mesure suivantes provenant du système de freinage (15) est utilisée pour définir la grandeur de consigne :
a) demande de freinage,
b) pression de freinage dans le système de freinage,
c) pression de freinage dans un cylindre de frein,
d) charge par essieu,
e) vitesse du véhicule,
f) décélération du véhicule,
g) vitesse d'une seule roue,
h) accélération d'une seule roue.

8. Procédé selon l'une des revendications précédentes, **caractérisé par** une réalisation des freins (21) d'au moins les roues (22) d'un essieu (11, 12, 13) du véhicule (10).

9. Procédé selon l'une des revendications précédentes, **caractérisé par** une réalisation de tous les freins (21) au niveau des roues (22) du véhicule (10).

10. Procédé selon l'une des revendications précédentes,
**caractérisé en ce que** la grandeur réelle, la grandeur de consigne et la valeur de comparaison (ΔF) pour les freins (21) au niveau des roues (22) du véhicule (10) sont déterminées distinctement de sorte qu'une action consécutive (A) distincte est déclenchée pour chaque roue (22) comportant un frein (21).

11. Procédé selon la revendication 10, **caractérisé en ce qu'**une valeur limite (FL) propre est invoquée pour chaque essieu (11, 12, 13) ou frein (21).

12. Procédé selon l'une des revendications précédentes,
**caractérisé en ce que** la valeur de comparaison (ΔF) est une différence entre la grandeur réelle et la grandeur de consigne.

13. Procédé selon l'une des revendications précédentes,
**caractérisé en ce que** la valeur de comparaison (ΔF) est un quotient de la grandeur réelle sur la grandeur de consigne.

14. Procédé selon l'une des revendications précédentes, **caractérisé par** une réalisation répétée pendant le processus de freinage.

15. Procédé selon l'une des revendications précédentes,
**caractérisé en ce qu'**une valeur moyenne est calculée à partir de plusieurs grandeurs réelles enregistrées et est utilisée comme grandeur réelle pour le calcul de la valeur de comparaison.

16. Procédé selon l'une des revendications précédentes, **caractérisé en ce que** les grandeurs réelles et les grandeurs de consigne de différents freinages sont mémorisées et une courbe caractéristique est ainsi estimée.

17. Procédé selon l'une des revendications précédentes,
**caractérisé en ce qu'**au moins l'une des actions consécutives suivantes est déclenchée :
a) un avertissement perceptible par un conducteur est émis,
b) une information est stockée dans une mémoire de données de fonctionnement du système de freinage (15),
c) une information est transmise, par l'intermédiaire d'un système télématique (17), à un destinataire situé à l'extérieur du véhicule (10).

18. Procédé selon la revendication 17, **caractérisé en ce que,** en cas de dépassement de la valeur limite (FL), une action préalable est déclenchée avant le déclenchement d'une action consécutive, à savoir une incrémentation d'un compteur d'erreurs, **et en ce que** l'action consécutive (A) est déclenchée uniquement lorsque le compteur d'erreurs dépasse une valeur limite de comptage.

19. Procédé selon la revendication 18, **caractérisé en ce que,** lorsque la valeur limite (FL) n'est pas dépassée, une action préalable négative est déclenchée, à savoir une décrémentation du compteur d'erreurs.

20. Procédé selon la revendication 19, **caractérisé en ce que** la décrémentation, lorsque la valeur limite (FL) n'est pas dépassée, est inférieure à l'incrémentation du compteur d'erreurs lors du dépassement de la valeur limite (FL).

21. Procédé selon l'une des revendications précédentes,
**caractérisé en ce qu'**au moins la grandeur réelle (Fm) ou la grandeur de consigne ou les valeurs de mesure prévues pour la définition de celles-ci, sont enregistrées de manière cyclique, **et en ce qu'**un processus de freinage est adopté lorsqu'au moins la grandeur réelle ou la grandeur de consigne ou les valeurs de mesure prévues pour la définition de celles-ci, dépassent une valeur limite de freinage.

22. Procédé selon l'une des revendications précédentes,
**caractérisé en ce que** l'énergie de freinage réelle (Em) est calculée à partir de la grandeur réelle et d'au moins un temps écoulé ou d'une distance parcourue.

23. Appareil de commande de freinage (15) comportant un logiciel pour la mise en œuvre du procédé selon l'une des revendications 1 à 22.

24. Système de freinage électronique pour un véhicule (10) comportant un châssis (28), des roues (22) et des freins (21), **caractérisé par** un appareil de commande de freinage (15) selon la revendication 23 et comportant des capteurs (23) pour l'enregistrement de données pour le calcul de la grandeur réelle et comportant des capteurs (19, 27) pour l'enregistrement de données pour le calcul de la grandeur de consigne.

25. Système de freinage selon la revendication 24, **caractérisé en ce que** les capteurs (23) pour l'enregistrement de données pour le calcul de la grandeur réelle comprennent des capteurs pour l'enregistrement d'au moins une flexion ou torsion.

26. Système de freinage selon la revendication 25, **caractérisé en ce que** les capteurs (23) pour l'enregistrement de données pour le calcul de la grandeur réelle comprennent des jauges de contrainte.

27. Système de freinage selon l'une des revendications 24 à 26,
**caractérisé en ce que** les capteurs (19, 27) pour l'enregistrement de données pour le calcul de la force de freinage de consigne (Fc) comprennent au moins des capteurs pour la définition de l'une des données suivantes :
a) demande de freinage,
b) pression de freinage dans le système de freinage,
c) pression de freinage dans un cylindre de frein,
d) charge par essieu,
e) vitesse du véhicule,
f) décélération du véhicule,
g) vitesse d'une seule roue,
h) accélération d'une seule roue.

28. Véhicule (10) comportant une installation de freinage pneumatique et un système de freinage électronique selon l'une des revendications 24 à 27.

29. Véhicule selon la revendication 28, **caractérisé par** une suspension pneumatique comportant des soufflets porteurs (16) et des capteurs de pression de soufflet (19).
